# EUROPEAN PATENT APPLICATION

(11) **EP 4 339 686 A1**
(43) Date of publication of application: **20.03.2024**
(21) Application number: 23195704.4
(22) Date of filing: 06.09.2023
(51) Int. Cl.: G02B 27/01, G02B 27/09, G02B 27/10, G02B 27/14

(54) **COMPACT LIGHT SOURCE MODULE**

(30) Priority: 19.09.2022 GB 202213691
(71) Applicant: Exalos AG, 8952 Schlieren (CH)
(72) Inventor: DÜLK, MARCUS, 8952 SCHLIEREN (CH); PRIMEROV, NIKOLAY, 8952 SCHLIEREN (CH)
(74) Representative: Keilitz Haines & Partner Patentanwälte PartGmbB

(57) **Abstract**

A light source module (50) comprising a plurality of semiconductor emitters (110, 120, 130), each configured to emit a beam at a different peak emission wavelength. Each beam is divergent with a more divergent, fast axis and a less divergent, slow axis. First single-axis focusing elements (511, 521, 531) focus the beams from respective emitters in one of the fast and slow axis while the beams remain divergent in the other of the fast and slow axis. A beam combiner (240) based on dichroic mirrors (122, 132) is arranged to bring the beams from the individual first single-axis focusing elements into a common optical axis. A common second single-axis focusing element (750) is arranged to focus the combined beams output from the beam combiner in the other of the fast and slow axis which are then output from the light source module.

## Description

### BACKGROUND OF THE INVENTION

The invention relates a light source module containing multiple light sources whose output beams are combined into a common output beam path.

Light source modules which incorporate multiple light sources and combine their respective outputs into a common beam path are important components for a variety of applications, such as for RGB (Red, Green, Blue) projection systems. RGB light source modules may be used in virtual reality (VR) and augmented reality (AR) devices, such as glasses, goggles or visors, and head-up displays (HUDs). Light source modules are also used in the medical field for optical coherence tomography (OCT). The light sources used in light source modules are most usually semiconductor emitters such as laser diodes (LDs) and superluminescent diodes (SLDs). A given module may also combine LDs and SLDs, e.g. two LDs for green and blue and one SLD for red.

The size of the light source module is an important consideration for many applications, e.g. for AR glasses. In turn, the size is in large part dictated by the components that are required to combine the beams, this being a 3-to-1 combination in the case of an RGB light source module.

One known design approach for reducing the size of an RGB light source module is to perform the beam combination with a Photonic Integrated Circuit (PIC) chip. Despite the attractiveness of PIC-based designs for size reduction, free-space optics are in many respects easier to work with, so another strand of the prior art is to make free-space beam combiner designs as small as possible.

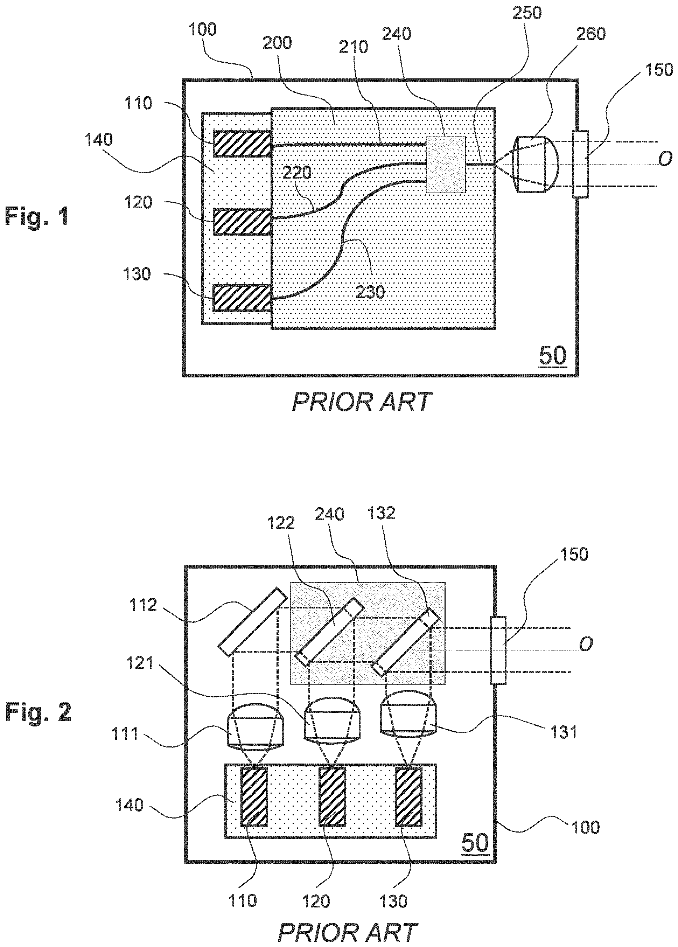

Figure 1 show schematically a prior art light source module with a PIC-based beam combiner that follows the design approaches disclosed in each of:
- Toshikazu Hashimoto and Junji Sakamoto "Visible-light Planar Lightwave Circuit Technology and Integrated Laser-light-source Module for Smart Glasses" NTT Technical Review Vol. 19 No. 3, pages 31-36, March 2021, and
- Joe Kamei, "SEIREN KST: Compact Full Color Optical Engine for Smart Glasses" Proc. SPIE 11764, SPIE AVR21 Industry Talks II, 117641E (6 April 2021); https://doi.org/10.1117/12.2598230

The light source module 50 comprises red, green and blue emitters 110, 120 and 130 that are mounted on a common submount 140. The light output from each emitter is coupled into a PIC chip 200. The PIC chip 200 contains first to third input waveguides 210, 220 and 230. Light from the red emitter 110 is coupled into one end of the first input waveguide 210. Light from the green emitter 120 is coupled into one end of the second input waveguide 220. Light from the blue emitter 130 is coupled into one end of the third input waveguide 230. The other ends of the three input waveguides 110, 120 and 130 lead to a beam combiner 240 that is also integrated in the PIC chip 200. The beam combiner 240 is a wavelength multiplexer that combines the red, green and blue light from the three input waveguides 210, 220 and 230 into one end of a common output waveguide 250. The other end of the output waveguide terminates on the periphery of the PIC chip 200 and outputs RGB beams along a common optical axis, O. Two specific designs of 3-to-1 wavelength multiplexer combiners are disclosed in the above-referenced Hashimoto et al and Kamei publications. The RGB light beams emitted from the output waveguide 250 are transmitted through a collimating lens 260. The collimated RGB beams output from the collimating lens 260 are then transmitted out of the light source module along a common optical axis, O, through an optical window 150 that is integrated into an end wall of the light source module housing 100.

One of the technical challenges with the waveguide device is the realization of the integrated beam combiner that would combine multiple input waveguides, each carrying a different colour or optical wavelength, into a common output waveguide with minimum excess losses. Another challenge is related to the chromatic dispersion of the effective index of the optical waveguides, which results in different mode sizes for the different colours, especially in the common output waveguide 250, and thus in different emission angles, expressed as different far field angles or different numerical aperture (NA) values. Another challenge is related to the collimation lens at the output waveguide, more specifically to the chromatic dispersion of the lens material. In most cases, the chromatic dispersion of the lens is not zero, which means that the lens is not achromatic. Therefore, the collimation performance of the lens is different for the individual colours. For optimum collimation, the emitting spot of the output waveguide is positioned in the focal plane of the collimation lens. For a regular chromatic lens, the focal length changes with colour, which means that the single collimation lens may perform sufficient or full beam collimation for the centre colour, for example green, while it would underperform for the higher colour, for example red, resulting in divergent beam output, and overperform for the lower colour, for example blue, resulting in convergent beam output.

Figure 2 shows a prior art light source module based on free-space beam combining optics as disclosed for three LD sources in:
- N. Primerov, J. Ojeda, S. Gloor, N. Matuschek, M. Rossetti, A. Castiglia, M. Malinverni, M. Duelk, C. Velez "Ultracompact RGB laser diode module for near-to-eye displays" Proceedings Volume 11788, Digital Optical Technologies 2021; 117880Q (2021) https://doi.org/10.1117/12.2594243

Essentially the same design is used for SLD sources in:
- US 11,131,795 assigned to Exalos AG (see e.g. FIG. 6 therein).

The light source module 50 comprises red, green and blue emitters 110, 120 and 130 that are mounted on a common submount 140. The divergent light beams output by the three emitters 110, 120 and 130 are collimated by respective collimation lenses 111, 121 and 131. The emitters are all arranged on a common submount 140 to emit their beams in parallel (upwards in the drawing). A mirror 112 reflects the collimated light beam from the first emitter 110 through 90 degrees so that it enters the beam combiner 240 at 90 degrees to the other collimated beams. The three collimated beams are then spectrally and spatially combined along a common optical axis, O, by a beam combiner 240 constituted by two dichroic filters 122 and 132 before exiting the module housing 100 through an optical window 150. In this free-space architecture, each collimation lens (CL) can be positioned at a different distance relative to the emitting spot of the light source, therefore allowing individual beam collimation despite each emitter emitting a different colour and despite each lens having chromatic dispersion and, therefore, having a different collimation performance and a different focal length for each emitted colour. If all the collimation lenses are of the same type, then the differences in the angular emission profiles of the light sources and the chromatic dispersion of the lens can be compensated to some extent by the individually adjusted working or focusing distance. A 4-emitter version of the same design as shown in Figure 2 is disclosed in:
- US2019179151A assigned to Google Inc (see FIG. 12B therein)
where there are not only R, G and B emitters but also a near-infrared (NIR) emitter. Generally, for each extra emitter the beam combiner requires one more dichroic filter, so this design of beam combiner can be used to combine 3, 4, 5 or more beams.

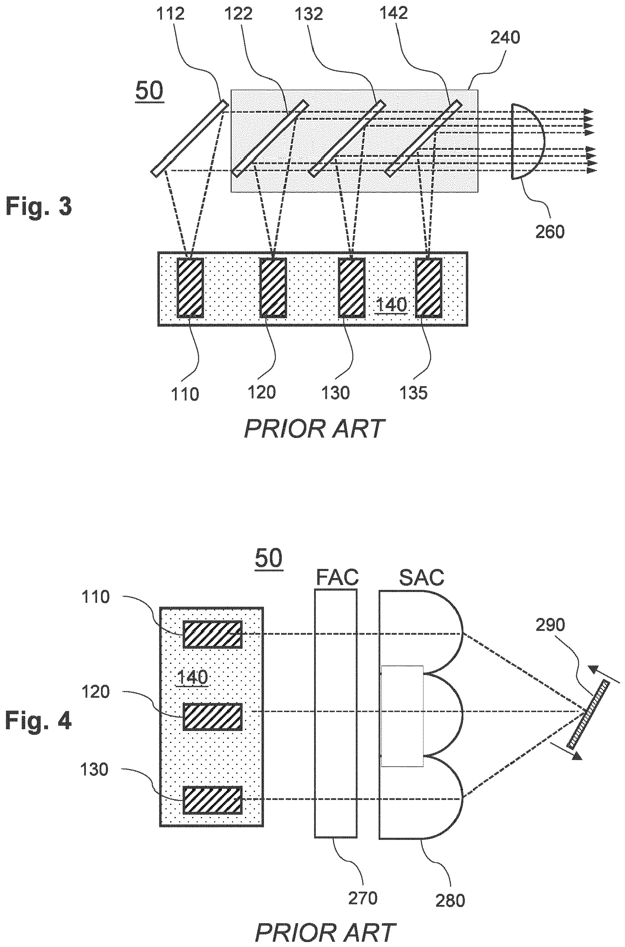

Figure 3 shows a prior art light source module based on free-space beam combining optics for 4-emitters also as disclosed in:
- US2019179151A assigned to Google Inc (see FIG. 12C therein)

The light source module 50 comprises red, green and blue emitters 110, 120 and 130 and a near-infrared (NIR) emitter 135 that are mounted on a common submount 140. The divergent uncollimated beams from the four emitters 110, 120, 130 and 135 are combined by a beam combiner 240 constituted by three dichroic filters 122, 132 and 142. The first emitter's beam is also deflected through 90 degrees by a plane mirror 112 prior to the beam combiner so it enters the beam combiner at 90 degrees to the other emitter beams. The beams output from the beam combiner 240 then have a common optical axis, O, and are collimated by a single collimation lens 260. We note that Figure 3 reproduces FIG. 12C of US2019179151A and the description of the module's operation is also as described in US2019179151A. Although the rays reflected from the plane mirror 112 and dichroic filters 122, 132 and 142 are depicted as being collimated, these rays must be divergent until they are collimated by the collimation lens 260. US2019179151A also proposes modifying the design of Figure 2 by adding a further collimation lens for the combined beams at the position of lens 260 in Figure 3, the further collimation lens 260 being said to have the function of fully collimating and/or correcting each of the combined beams.

Figure 4 shows a prior art light source module based on free-space beam combining optics as disclosed for three LD sources in:
- Jörg Reitterer, Zhe Chen, Anna Balbekova, Gerhard Schmid, Gregor Schestak, Faraj Nassar, Manuel Dorfmeister, Matthias Ley, "Ultra-compact micro-electro-mechanical laser beam scanner for augmented reality applications," Proc. SPIE 11765, Optical Architectures for Displays and Sensing in Augmented, Virtual, and Mixed Reality (AR, VR, MR) II, 1176504 (27 March 2021); doi: 10.1117/12.2576704, and
- EP2977808A1 assigned to Trilite Technologies GmbH

The light source module 50 comprises red, green and blue emitters 110, 120 and 130 that are, as shown, mounted on a common submount 140. The three emitters 110, 120 and 130 are LDs that have their output beams collimated in their fast axes by a common cylindrical lens 270 to achieve fast axis collimation (FAC) and then the three beams that are collimated in their fast axes only are received by a monolithic block of three cylindrical lenses 280 that collimate the slow axes of the beams to achieve slow axis collimation (SAC) and thus output beams that are collimated in both their fast and slow axes. Performing beam collimation in this way with a crossed pair of cylindrical lenses is suitable for collimating an elliptical cross-section beam, as is emitted from an edge-emitting LD or SLD, where the elliptical cross-section arises from diffraction at the output facet of the semiconductor chip. (On the other hand, a vertical cavity surface emitting laser (VCSEL) will emit a circular cross-section beam so a single spherical lens is suitable for beam collimation.) With an elliptical cross-section divergent beam, the different beam divergences in the two axes of the ellipse can therefore be independently corrected. Moreover, as done in the design of Figure 4, it is sensible first to collimate the more strongly divergent, fast axis and then the less strongly divergent, slow axis. The reverse order is less preferred, since the collimation lens for the strong axis would need to be larger. In the design of Figure 4, there is no beam combiner as such in the light source module - rather the three output beams (RGB) are directed onto a common point at the centre of a tiltable MEMS mirror 290 which can scan any one of the incident RGB beams in the desired direction to generate an image through rapid time slicing, i.e. writing each of the R, G and B beams onto the display surface sequentially with a repetition rate faster than the persistence time of the eye. In other words, the MEMS mirror enables each of the R, G and B beams to be output in the same output beam path but not at the same time; rather by positioning the MEMS mirror at different angles to take account of the different arrival angles of the R, G and B beams from the SAC lens(es) 280.

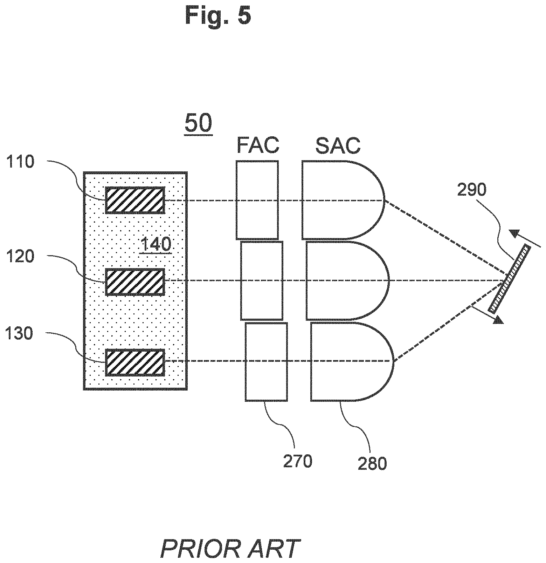

Figure 5 shows a modified version of the design of Figure 4 as disclosed in:
- EP3637171A1 assigned to Trilite Technologies GmbH (see e.g. Figs 9a & 9b therein)

Compared to the design of Figure 4, each of the FAC and SAC lenses is provided as an individual lens. This is done so that the distance from light source to FAC lens and light source to SAC lens can be set individually for each beam. This individual positioning of the FAC and SAC lenses takes account of the wavelength dependency of refractive index of the lens material, i.e. the effect that a given lens will have different focusing powers for each of the three emission wavelengths in the red, green and blue - or more precisely emission wavelength ranges in the red, green and blue. During manufacture of the light source module 50, the lenses are individually positioned in a calibration process to ensure that each beam is precisely focused along both fast and slow axes on the MEMS mirror 290.

Further beam combining light source modules are disclosed in:
- US2022013975A1 assigned to Robert Bosch GmbH
- WO21044409A1 assigned to Lumus Ltd
- US2013215923 assigned to Corning Inc

### SUMMARY OF THE INVENTION

According to an aspect of the invention there is provided a light source module comprising:
a plurality of semiconductor emitters, each configured to emit a beam at a different peak emission wavelength, each beam being divergent with a more divergent, fast axis and a less divergent, slow axis;
a plurality of first single-axis focusing elements arranged to focus the beams from respective ones of the emitters in one of the fast and slow axis while the beams remain divergent in the other of the fast and slow axis;
one or more dichroic mirrors arranged to receive the beams from the individual first single-axis focusing elements and configured to act as a beam combiner to bring the beams into a common optical axis; and
a common second single-axis focusing element arranged to focus the combined beams output from the beam combiner in the other of the fast and slow axis and output them as respective output beams that form an image in a common plane located at a reference distance away from the light source module.

Some example values for the reference distance at which the image is formed on the common plane are 10 mm, 20 mm, 50 mm or 100 mm. The reference distance may also be infinity to form an image at infinity.

In some embodiments, in the common plane, each output beam has a beam diameter that is as close as possible to the beam waist diameter, e.g. no more than 1.3, 1.4, >/2 (≈1.414) or 1.5 times the beam diameter at the beam's beam waist. In other words, each of the output beams is brought to a focus, within a certain tolerance, in the common plane.

In some embodiments, in the common plane, each output beam has an ellipticity of greater than 70%, 80% or 90%, where ellipticity is the ratio of the smaller one of the beam diameters of the fast and slow axes versus the larger one of the beam diameters of the fast and slow axes. Each of the output beams thus has an approximately circular cross-section in the common plane.

In some embodiments, in the common plane, the ratio of the beam diameters of the smallest one of the beam diameters versus the largest one of the beam diameters is greater than 50%, 60%, 70%, 80% or 90%. Each of the output beams thus has approximately the same spot size in the common plane.

In some embodiments, the individual first single-axis focusing elements are arranged to focus the fast axis and the common second single-axis focusing element is arranged to focus the slow axis. In other embodiments, the individual first single-axis focusing elements are arranged to focus the slow axis and the common second single-axis focusing element is arranged to focus the fast axis.

In some embodiments, the emitters, individual first single-axis focusing elements and dichroic mirrors are accommodated in a housing and the second single-axis focusing element is a lens integrated in the housing as an output window.

In some embodiments, every one of the first single-axis focusing elements is a lens or lens combination. In other embodiments, all but one of the first single-axis focusing elements are lenses or lens combinations, the other being a concave mirror which is arranged to direct its output onto a back surface of a first one of the dichroic mirrors.

In some embodiments, the common second single-axis focusing element is a lens or lens combination. In other embodiments, the common second single-axis focusing element is a concave mirror.

In certain embodiments, the semiconductor emitters are any combination of: edge-emitting superluminescent light-emitting diodes (SLDs); edge-emitting laser diodes (LDs); and vertical-cavity surface-emitting lasers (VCSELs). The emitters may be all of the same type, e.g. all LDs, or a mixture of emitters of 2 or 3 different types, e.g. one SLD and two LDs, or one or two LDs and one or two VCSELs.

The light source module may be for emitting three primary colours as needed for display or projector applications. Namely, the module has semiconductor emitters with peak emission wavelengths with red, green and blue colours to provide an RGB light source module.

In addition to modules with emitters that have peak wavelengths in the visible wavelength region (approximately 380 to 750 nm), the modules may incorporate semiconductor emitters with peak emission wavelengths in the near-infrared (e.g. from 750 nm up to 2 micrometres).

In certain embodiments, the light source module further comprises a beam-steering element arranged to receive the combined beams output from the common second single axis focusing element and controllably vary the direction which the output beams exit the light source module.

In certain embodiments, the light source module further comprises one or more beam-shaping optical elements arranged to receive the combined beams output from the common second single axis focusing element and reshape the combined beams before they exit the light source module.

Various options for realising the single axis focusing elements, i.e. lenses or mirrors, will be known to the person skilled in the art. For example:
- Each of the first single-axis focusing elements may have at least one surface that is flat, spheric or aspheric with a first curvature in one axis and that is flat, spheric or aspheric with a second curvature in the other axis (e.g. a cylindrical lens)
- The common second single-axis focusing element may have at least one surface that is flat, spheric or aspheric with a first curvature in one axis and that is flat, spheric or aspheric with a second curvature in the other axis (e.g. a cylindrical lens with its axis aligned orthogonal to the first single axis focusing elements thereby to form a crossed pair).

Another option for realising the focusing elements is to use free-form lenses with an arbitrary amount of diffractive power in one or the other axis.

Various options for realising and arranging the dichroic filters of the beam combiner will be known to the person skilled in the art. For example:
- The dichroic filters may have a single edge at one specified wavelength such that longer wavelengths are reflected while shorter wavelengths are transmitted
- The dichroic filters may have a single edge at one specified wavelength such that shorter wavelengths are reflected while longer wavelengths are transmitted
- The dichroic filters may have a double edge at two specified wavelengths such that wavelengths shorter than the first wavelength or longer than the second wavelength are reflected while wavelengths longer than the first wavelength and shorter than the second wavelength are transmitted
- The dichroic filters may have a double edge at two specified wavelengths such that wavelengths shorter than the first wavelength or longer than the second wavelength are transmitted while wavelengths longer than the first wavelength and shorter than the second wavelength are reflected

Light source modules according to the invention may be used as components of a display projector module. There may thus be provided a display projector module comprising: a light source module according to the invention; and a beam scanner for raster scanning the output beams to form an image. Moreover, such display projector modules may be used as components of a head-mounted vision system.

Furthermore, light source modules according to the invention may even incorporate a beam scanner such that the output beam of the module is not static but steered in different directions as desired, e.g. scanned in one axis or two axes.

Light source modules according to the invention may also comprise additional beam-shaping optics to enlarge or compress the optical output beam in one axis or in two axes.

### BRIEF DESCRIPTION OF THE DRAWINGS

This invention will now be further described, by way of example only, with reference to the accompanying drawings.
Figure 1 is a schematic drawing of a prior art light source module based on a PIC chip beam combiner.
Figures 2 to 5 are schematic drawings of different prior art light source modules based on free-space beam combining optics.
Figure 6 is a schematic perspective drawing of a divergent beam of circular cross-section emitted from a point source.
Figure 7 is a schematic perspective drawing of a divergent beam of elliptical cross-section emitted from a point source.
Figures 8a & 8b show the basic chromatic dispersion dependence of the focusing power of a lens.
Figure 9 is a schematic plan view of a light source module according to an embodiment of the invention.
Figure 10a shows three orthogonal views in the yz-plane of lens collimation arrangements for each of three beams and Figure 10b shows the same lens collimation arrangements as Figure 10a in the xz-plane.
Figures 11a to 11d show how differences in emission wavelength (colour) and differences in emission angle α of the light output from the emitter can be compensated.
Figure 12a shows three schematic graphs of *divergent* beam diameters *w* for the horizontal axis H and the vertical axis V as a function of propagation distance, *z*, away from the light source module, for any of the three beams of wavelengths *λ1*, *λ2*, *λ3* output from the light source module.
Figure 12b shows three schematic graphs of *convergent* beam diameters *w* for the horizontal axis H and the vertical axis V as a function of propagation distance, *z*, away from the light source module, for any of the three beams of wavelengths *λ1*, *λ2*, *λ3* output from the light source module.
Figure 13a shows a schematic graph of a comparative example to illustrate how the horizontal beam diameter H and the vertical beam diameter V may change as a function of propagation distance, *z*, for a beam output from a semiconductor edge-emitting light source, like a LD or SLD, when a single lens is used.
Figure 13b shows a schematic graph of how the horizontal beam diameter H and the vertical beam diameter V may change as a function of propagation distance, *z*, for a beam output from a semiconductor edge-emitting light source, like a LD or SLD, that was focused with a first single-axis lens and a second single-axis lens as in embodiments of the invention.
Figures 14 to 19 are schematic plan views of light source modules according to further embodiments of the invention.
Figure 20 and 21 show two examples of near-to eye projection system incorporated in a vision system having a spectacles format.

### DETAILED DESCRIPTION

In the following detailed description, for purposes of explanation and not limitation, specific details are set forth in order to provide a better understanding of the present disclosure. It will be apparent to one skilled in the art that the present disclosure may be practiced in other embodiments that depart from these specific details.

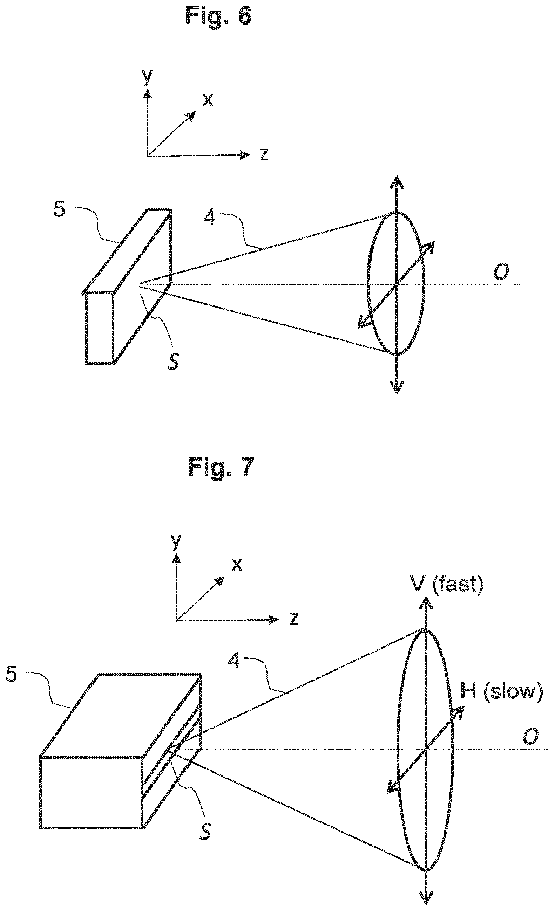

Figure 6 is a schematic perspective drawing of a divergent beam 4 of circular cross-section emitted from a source point, S. This would be the situation for an output by: a VCSEL; an optical fibre laser; an optical fibre at the end of a cascade of fibre couplers used for combining beams; for an edge-emitting LD or SLD that has an integrated lens at its output face to correct for the different divergences of the chip facet output; or for an edge-emitting LD or SLD that is otherwise carefully designed to have identical mode sizes in the horizontal and vertical axis at the output facet, for example by deploying horizontal or vertical tapers or other beam-shaping structures.

Figure 7 is a schematic diagram of a divergent beam 4 with an elliptical cross-section as output by an edge-emitting LD or SLD 5 emitted from a source point, S. The beam has a vertical, fast axis and a horizontal, slow axis. For an elliptical cross-section beam there will be both a major diameter (along the fast axis in the x-direction labelled V for vertical) and a minor diameter (along the slow axis in the y-direction labelled H for horizontal).

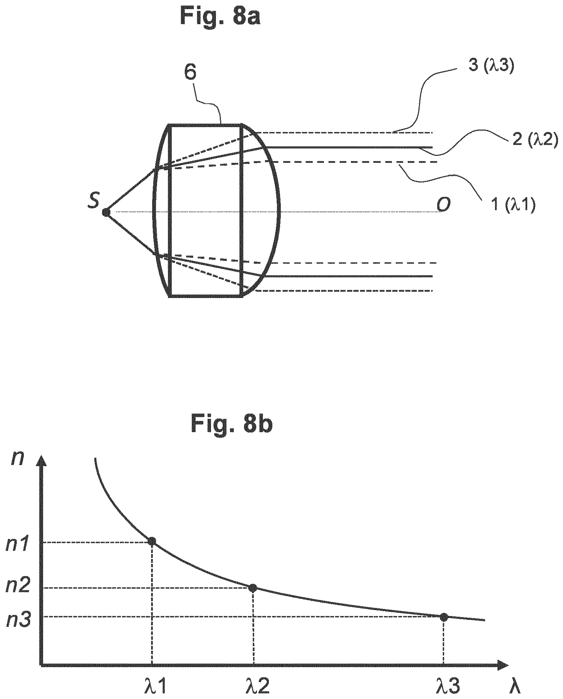

Figures 8a & 8b show the basic chromatic dispersion dependence of the refractive power of a lens. Figure 8a is a schematic diagram of a lens 6 arranged to collimate three different beams 1, 2, 3 of three different wavelengths λ1, λ2, λ3, e.g. colours, the beams all having a common source point, S. Figure 8b is a schematic graph showing the dependence of wavelength, λ, on refractive index, n, for an arbitrary lens material, e.g. as is typical for common transparent glasses and crystals. Any lens material and hence any given lens will have a different refractive power *n1, n2, n3* that is dependent on the wavelength of the light λ1, λ2, λ3. The difference in the refractive power stems from the chromatic dispersion of the lens material. Using a ray model and considering Snell's law of refraction, it is evident that a change in the refractive index of the lens material will result in different refraction angles when the light passes any of the lens surfaces. If the two lens surfaces are not parallel, a lens is formed that is capable of changing the beam propagation direction dependent on the colour of the light. This may result in different beam diameters for the collimated output beams. For simplicity, in Figure 8a it was not considered that lenses may also have different focal lengths for different colours.

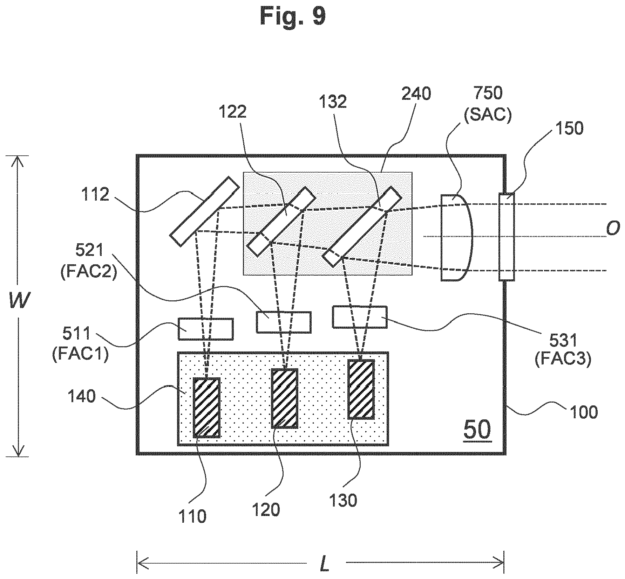

Figure 9 is a schematic plan view a light source module 50 according to an embodiment of the invention. The light source module 50 comprises red, green and blue emitters 110, 120 and 130 that are mounted on a common submount 140. Each emitter emits a divergent beam which has an elliptical cross-section, although the design may also be used for emitters that emit a circular cross-section divergent beam. Each divergent beam is focused in the fast axis (out of the page of the drawing) by individual one-axis lenses 511, 521 and 531, for example cylindrical lenses. These are referred to as fast-axis collimation (FAC) lenses FAC1, FAC2 and FAC3 respectively. In the plan view of Figure 9, the FAC lenses 511, 521, 531 have no apparent effect on the beam divergence, since the focusing is in the axis out of the plane of the paper. The beam from emitter 110, which is now collimated in the fast axis by the one-axis collimating lens 511, is deflected by 90 degrees by a plane mirror 112 prior to entering a beam combiner 240 formed by dichroic filters 122, 132. In a variant, the deflection angle of the plane mirror 112 may deviate somewhat from 90 degrees, e.g. by up to ±20 degrees. The three beams that are input into the beam combiner 240 are thus still diverging in the slow axis and this is also the case for the three beams as output by the beam combiner 240. The beam combination thus takes place by the dichroic filters 122, 132 while the three individual beams are collimated in the fast axis but are still diverging in the slow axis. The dichroic filters could be edge filters, i.e. single-edge filters, in which case the emitters would need to be arranged in wavelength order (either descending as illustrated or ascending). On the other hand, if the dichroic filters are bandpass or band-reflect filters, i.e. two-edge filters, there would be no requirement for any particular wavelength sequence; rather any arbitrary sequence would be possible.

The combined beams output from the beam combiner 240, i.e. the three individual beams that now share a common optical axis, *O*, are then incident on a slow-axis collimation (SAC) lens 750 to complete the collimation. (In an alternative embodiment, the SAC lens may be exchanged for an equivalent SAC mirror.) The collimated beams are then output from the module 50 along the common optical axis, *O*, via a window 150 arranged in an end wall of a housing or enclosure 100 that contains the various components.

In our description of the light source module we use the terms collimation lens, and collimated output beam in a somewhat loose manner (which is not uncommon in the art). It is namely a design choice whether the light source module forms an image at infinity, which would imply parallel rays for the output beams in a simple ray optical consideration of the situation (i.e. collimated beams in a strict ray optics sense), or to form an image at a finite distance away from the light source module, e.g. at a distance in the range 10 mm to 100 mm, in which case the output beams would not be collimated (in a simple ray optics sense). The terms SAC and FAC lens therefore do not imply that their output beams form an image at infinity from a point source object but also include forming an image at a finite distance.

In some embodiments, in the common plane, each output beam has a beam diameter that is as close as possible to the beam waist diameter, e.g. no more than 1.3, 1.4, >/2 (≈1.414) or 1.5 times the beam diameter at the beam's beam waist. In other words, each of the output beams is at or close to its focus, i.e. within a certain tolerance, in the common plane.

The FAC lenses 511, 521, 531 may all be the same while nevertheless being able to compensate for the three beams having different vertical far field (VFF) values and/or different colours by positioning each FAC lens at a defined distance to its emitter, i.e. the distance from each emitter to its FAC lens may all be different and set individually. In order to achieve the same or similar beam diameters in the slow axis after the SAC lens among the three beams and/or to achieve the same or similar beam diameters in the fast and slow axis directions for each beam, the propagation distance between the common SAC lens 750 and each of the emitters 110, 120, 130 is carefully defined in the layout of the optical module so that the wavelength dependent differences in the refractive power of the common SAC lens for each of the three beams is compensated for. Similar spot size of each of the beams can be defined in terms of having similar beam diameters at a common plane located at a reference distance from the light source module, such as 10 mm, 20 mm, 50 mm or 100 mm, or infinity, for example. Beam diameter similarity may be defined by the ratio of the beam diameters of the smallest one of the beam diameters versus the largest one of the beam diameters. For example, the spot sizes may be deemed to be sufficiently similar if this ratio is greater than 50%, 60%, 70%, 80% or 90%.

Another degree of design freedom can be provided by the ability to vary the horizontal divergence (HFF) of the emitters through the chip design. For an edge-emitting device with an optical waveguide, for example an LD or an SLD, the horizontal mode size can be tailored over a relatively wide range through the waveguide width or the waveguide height or its index profile. For instance, a horizontal taper could be realized near the output facet of the chip such that the HFF for a particular emitter is matched to the refractive power of the common SAC lens and to a desired reference propagation distance from the module where the combined beams are to have particular specified properties in terms of beam divergence/collimation/convergence and beam cross-sectional shape. Similarly, for an edge-emitting device like an LD or an SLD, the vertical mode size and thus the VFF can be tailored to some extent by modifying the optical waveguide structure in the vertical axis, for example by adjusting the refractive index profile of the epitaxial layer structure or the thickness values of certain layers of this structure.

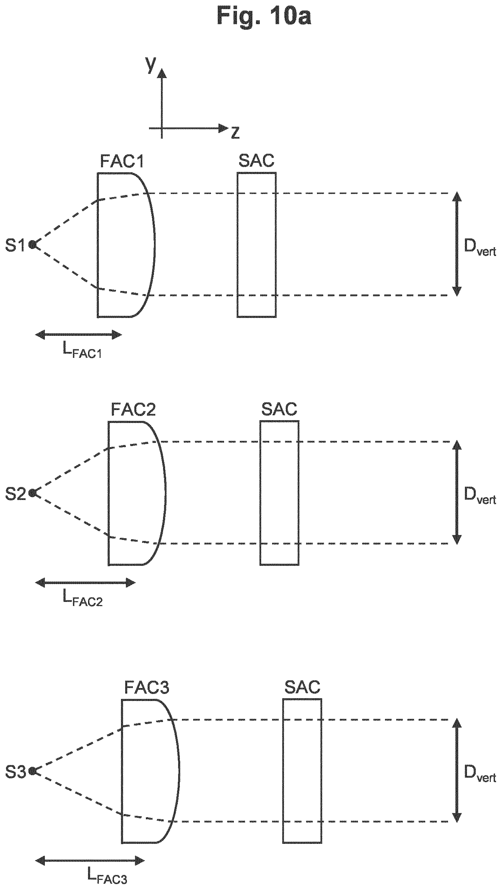

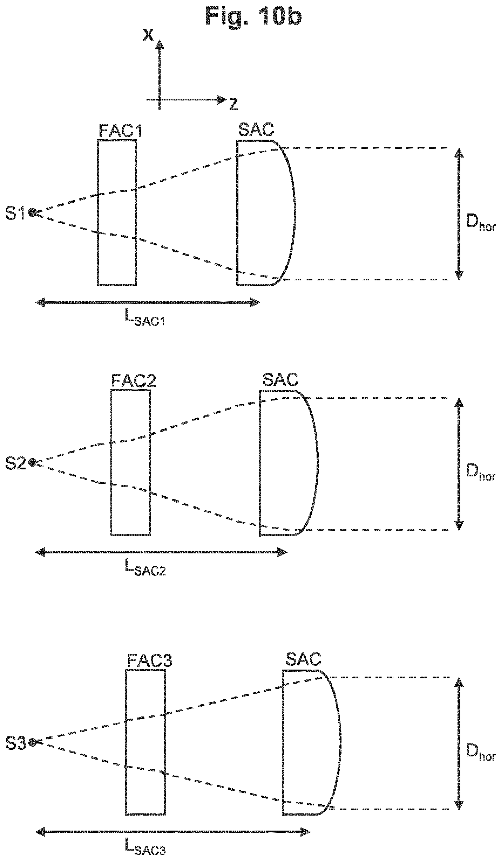

Figures 10a and 10b are orthogonal views of the collimation arrangement for each of the three beams as shown in Figure 8 but with the beam combining mirror and dichroic filters removed in order to show the optical geometry more clearly. The propagation direction is defined as the z-direction.

Referring to Figure 10a, which represents a typical side view, the distances from the sources at locations S1, S2, S3 to their respective FAC lenses, FAC1, FAC2, FAC3 are labelled L_FAC1, L_FAC2, L_FAC3. These distances are set individually to provide equal beam diameters D_vert in the vertical direction (fast axis / y-direction) after the lens, taking account of possibly different divergences angles of the sources as well as their different output wavelengths, and/or different refractive powers of the FAC lens.

Referring to Figure 10b, which represents a typical top view, the distances from the sources at locations S1, S2, S3 to the common SAC lens are labelled L_SAC1, L_SAC2, L_SAC3. These distances are set individually to provide equal beam diameters D_hor in the horizontal direction (slow axis / x-direction) after the lens, taking account of possibly different divergences angles of the sources as well as their different output wavelengths, and/or different refractive powers of the SAC lens.

Looking at Figures 10a and 10b, it will be understood how it is possible to use a common SAC lens instead of three individual SAC lenses without loss of performance. Namely, the use of a common SAC lens effectively fixes the absolute position in space of what would otherwise be nominally individual SAC lenses so that they are all in the same absolute position. The optimum values of all of the distances L_FAC1, L_FAC2, L_FAC3 and L_SAC1, L_SAC2, L_SAC3 can still be provided for, since the absolute positions of the individual FAC lenses and the individual sources can be freely chosen. This is why in Figure 9, the emitters 110, 120, 130 are shown mounted staggered on their submount 140 and the FAC lenses are also shown staggered. It is, therefore, possible to use a crossed pair of cylindrical lenses for the collimation while only needing to accommodate one of the pair prior to the beam combiner, i.e. the FAC lenses. Otherwise, if each beam needed its own FAC and SAC lens pair, then both lenses would need to be arranged before the beam combining components 112, 122, 132.

Performing the slow-axis collimation after combining the beams and the fast-axis collimation before combining the beams provides several advantages.

First, the optical module can be made with a smaller width (see width dimension W on Figure 8) than would be the case if each beam had a pair of SAC and FAC lenses arranged prior to the beam combiner.

Second, the distances L_SAC1, L_SAC2, L_SAC3 can be made much larger than would be the case if each beam had a pair of SAC and FAC lenses arranged prior to the beam combiner. In other words, the deferral of the slow-axis collimation until after beam combining allows for much larger L_SAC distances within a small module.

Third, the distances L_FAC1, L_FAC2, L_FAC3 can also be made larger for a given module width than would be the case if each beam had a pair of SAC and FAC lenses arranged prior to the beam combiner, since there is only one lens per beam before the beam combiner.

Referencing both the second and third advantages, larger source-to-lens distances are beneficial for both the FAC and SAC distances because this allows the beams to diverge for a longer distance before fast axis and/or slow axis collimation and therefore provides a larger beam cross-section of the combined output beams. Typically, for the same size module enclosure, i.e. form factor, the beam size achievable with the arrangement of Figure 9 is perhaps 3-7 times greater than for the prior art module shown in Figure 2, e.g. 1.0-1.5 mm beam diameter compared with 200-400 µm beam diameter of the combined output beams.

Fourth, in a three-source module as illustrated, two optical components are eliminated compared with having three individual SAC lenses, since the common SAC lens performs the slow-axis collimation for all three beams. With a higher number of sources, e.g. four or more, the benefit is further increased. Reducing the component count is not also a cost saving but also saves manufacturing time by reducing the number of components that need to be aligned optically before fixation. Having a lower component count may also improve manufacturing yield.

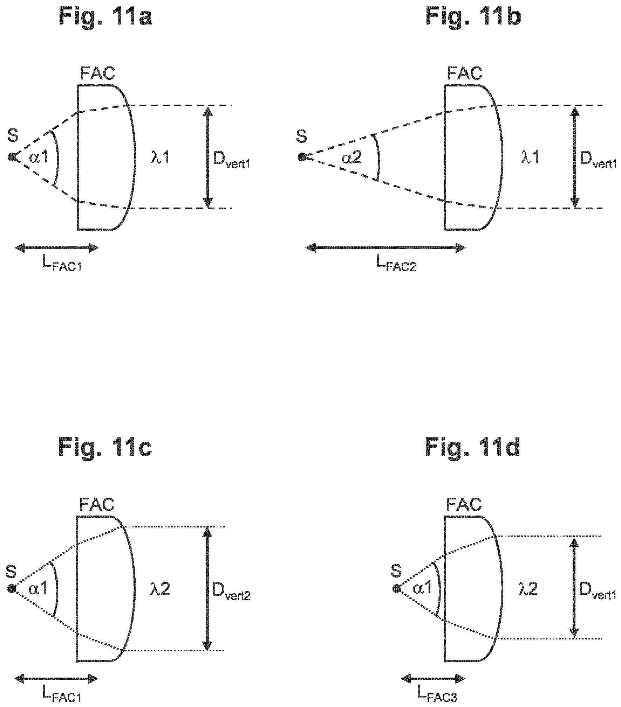

Figures 11a to 11d show how differences in emission wavelength (colour) and differences in the emission angle α of the light output from the emitter can be compensated by changing the distance L_{FAC} between the emitter and the FAC lens for collimation in the vertical axis. When reducing the vertical divergence angle of the source S from α1, shown in Figure 11a, to α2, shown in Figure 11b, the same vertical beam diameter D_vert1 can be achieved at the output of the FAC lens by increasing the distance of the FAC lens to the source. Similarly, when the vertical divergence angle is kept constant but the wavelength of the source S is changed from λ1, shown in Figure 11a, to λ2, shown in Figure 11c, the refractive power of the FAC lens will change, for example may reduce, which will result in a larger vertical beam diameter D_vert2. However, reducing the distance between the FAC lens and the source, as shown in Figure 11d, would restore the same vertical beam diameter D_vert1. Exactly the same applies to the SAC lens for collimation in the horizontal axis. Figures 11a to 11d thus show how different emission angles and different far field angles can be compensated by varying the distance between the collimation lens and the source. With lenses that perform collimation in only one axis, such FAC and SAC lenses, this adjustment can be done individually and independently for each orientation such that circular beams or elliptical beams with a defined aspect ratio can be realized for different emitters with different output wavelengths and divergence angles.

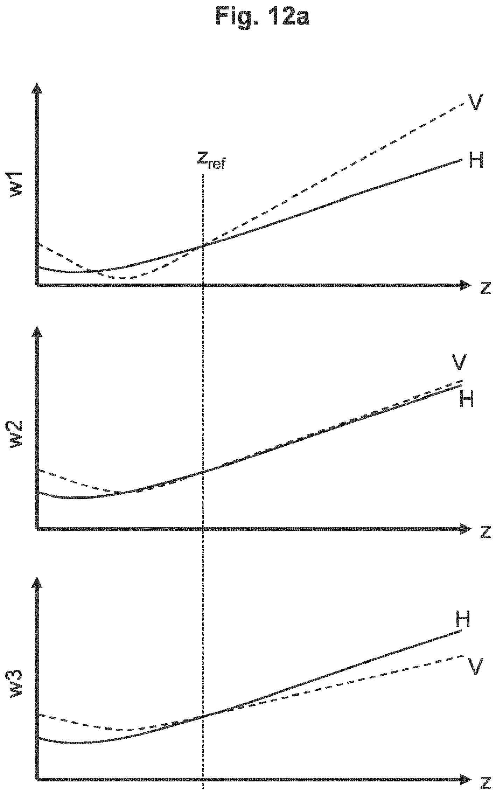

Figure 12a shows three schematic graphs of *diverging* beam diameters, *w*, of any one of the beams 1, 2, 3 output from the light source module as a function of propagation distance, z, wherein the beam may have any one of the wavelengths λ1, λ2, λ3. The beam diameters are plotted both for the major, vertical (V) and the minor, horizontal (H) axis. The major and minor beam diameters for each beam evolve differently as a function of propagation distance. For any given beam, it is possible to achieve a circular beam (i.e. make the major and minor beam diameters equal to each other) in a plane perpendicular to the optical axis that is located at a defined reference distance, z_ref, away from the light source module by adjusting the position of a single focusing lens relative to the source point (i.e. the location of the output facet of the semiconductor chip). In the case of a crossed pair of single-axis lenses for focusing each axis independently, a circular beam can be formed at a defined reference distance, z_ref, by adjusting the positions of the FAC and SAC lenses relative to the source point. Each lens (or lens pair) will be chosen to meet a specified reference distance, so that the beam is circular at a certain value of z_ref, such as 10 mm, 20 mm, 50 mm or 100 mm, or infinity, for example. However, at other distances not equal to the reference distance, the horizontal and vertical beam diameters may evolve differently, resulting generally in the beam cross-section being elliptical at an arbitrary distance. The beams may also show different divergence angles in the horizontal (y) and vertical (x) directions. For example, the beam may evolve with diameters w1, as shown in the first graph of Figure 12a, where for distances z larger than z_ref the vertical divergence V is larger than the horizontal divergence H. Another possibility is that the beams evolve with diameters w2, as shown in the second graph of Figure 12a, where for distances z larger than z_ref the vertical divergence V is nearly identical to the horizontal divergence H. A third possible scenario is that the beams evolve with diameters w3, as shown in the third graph of Figure 12a, where for distances z larger than z_ref the vertical divergence V is smaller than the horizontal divergence H. These different possible behaviours follow from the fact that the emitters may have different emission angles in the horizontal and vertical direction and that the degree of focusing or collimation by the lens, or crossed pair of single-axis lenses, will not in general be the same in the horizontal and vertical directions. Differences may also arise from astigmatism of the emitters, whereby the effective emission spot may have a different relative distance in the horizontal or vertical orientations, for example from the emitting output facet of the emitting device or from the lens. The different distances from FAC lens to source and SAC lens to source that are needed for each beam to achieve circular cross-section at the same location in space can be accommodated in the present design despite the use of a common SAC lens by translating the source positions and FAC lens positions relative to the common SAC lens position appropriately, i.e. in general, the FAC lenses and emitters will be positioned staggered relative to each other as a result of the amount of translation that is needed, as will be pre-calculated when designing the module and/or determined experimentally during manufacture by refining the mounting positions of each emitter on their submount 140 while they are emitting their beams to achieve the desired beam characteristics in a plane perpendicular to the optical axis at the reference distance z_ref from the light source module.

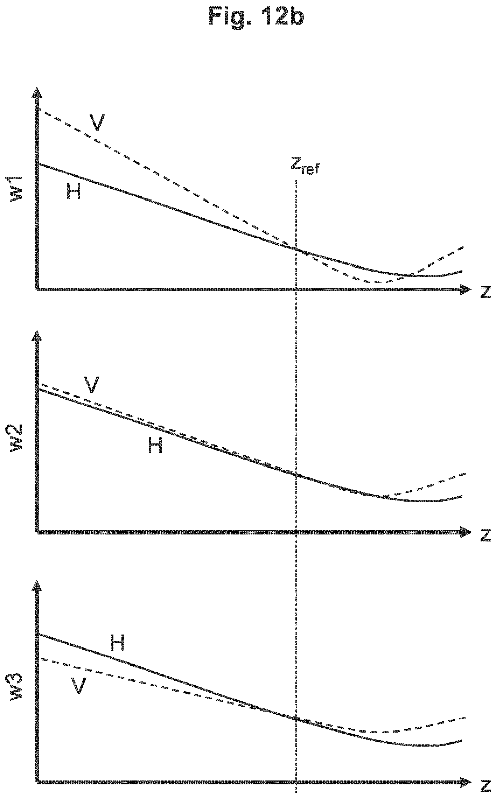

Figure 12b shows, similar to Figure 12a, three schematic graphs of beam diameters, w, of any one of the beams 1, 2, 3 output from the light source module as a function of propagation distance, z, where the beam may have any one of the three wavelengths λ1, λ2, λ3. While Figure 12a showed three examples of *divergent* beams, Figure 12b shows three examples of *convergent* beams that achieve a circular beam shape in a plane perpendicular to the optical axis at a defined reference distance, z_ref, away from the light source module by adjusting the position of a single lens, or the positions of the FAC and SAC lenses, in the case of a crossed pair of single-axis lenses. For example, the beam may evolve with diameters w1, as shown in the first graph of Figure 12b, where for distances z smaller than z_ref the vertical convergence V is larger than the horizontal convergence H. Another possible outcome is that the beam evolves with diameters w2, as shown in the second graph of Figure 12b, where for distances z smaller than z_ref the vertical convergence V is nearly identical to the horizontal convergence H. A third possibility is that the beam evolves with diameters w3, as shown in the third graph of Figure 12b, where for distances z smaller than z_ref the vertical convergence V is smaller than the horizontal convergence H. For a typical semiconductor, edge-emitting light source, such as an LD or an SLD, the first example with diameter w1 is more common, especially if a single lens is used for collimating or focusing the output beam in both axes, i.e. the beam ellipticity of the output beam is such that the vertical beam diameter is larger than the horizontal beam diameter.

In Figure 12a and Figure 12b, the example shown in the first graphs, *w1*, represents a situation where the horizontal and vertical beam diameters have crossing points at two different propagation distances z. At each crossing point, the horizontal beam diameter H and the vertical beam diameter V have the same value such that the beam is effectively circular. However, beam diameters are commonly measured and defined on the second moment of the power density distribution function, which may result in beam shapes that are not ideally round or elliptical but have an otherwise unusual beam shape in one or the other axis. Therefore, for certain applications where beam shape is important, one of the two crossing points with a nominally circular beam might be more preferred than the other crossing point, which is why the reference distance z_ref in Figure 12a or Figure 12b was defined at only one of those crossing points. At this reference distance, z_ref, from the light source module, a specific optical element might be positioned, for example a scanning mirror or an optical aperture or an entry window of a waveguide device.

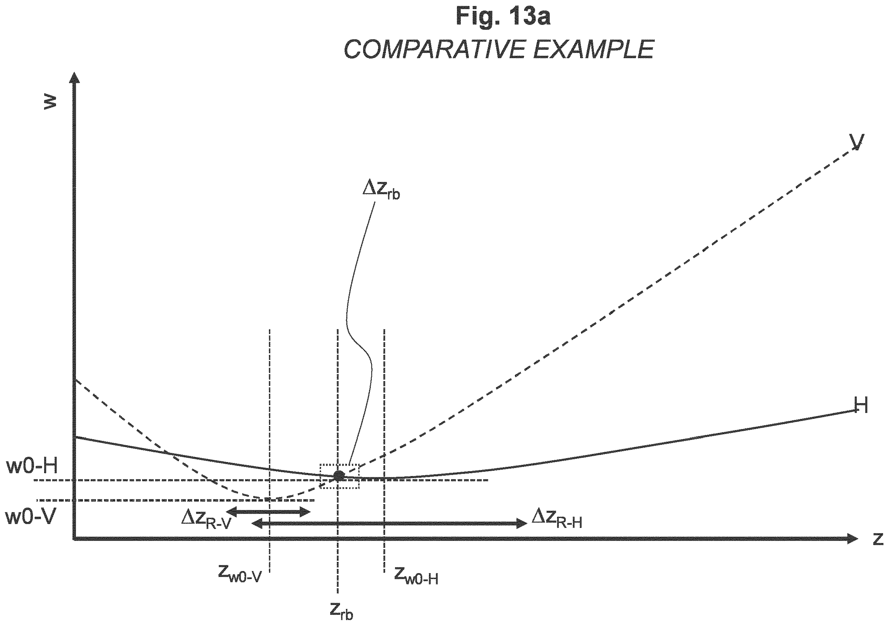

Figure 13a describes, by way of a comparative example, the typical performance that is achievable when using a single collimating lens, for example an aspheric lens, to form a beam from the output of a semiconductor, edge-emitting light source, such as an LD or an SLD. A single collimation lens has the role of simultaneously collimating the horizontal, slow axis and the vertical, fast axis. In more detail, Figure 13a shows how the beam diameters w of a collimated beam in the fast-axis, vertical direction V and in the slow-axis, horizontal direction H may evolve over propagation distance z. In this example, the vertical collimated beam emitted by the light source module may first converge until the beam diameter reaches a minimum at the distance z_w0-V. The minimum beam diameter w0-V is also referred to the beam waist. Over a certain propagation distance Δz_R-V around this minimum in the beam diameter, the vertical beam diameter remains approximately constant within a certain tolerance, for example not increasing by more than one of 30%, 40%, >/2 (41.4%) or 50% compared with the beam diameter at the beam waist. For Gaussian-shaped beams, this propagation distance may refer to twice the Rayleigh length over which the beam diameter increases by >/2. Elliptical beams may show two different beam waists at different propagation distances, i.e., the beam waist for the vertical axis, w0-V, might be different to the beam waist for the horizontal axis, w0-H, as illustrated. Furthermore, the propagation distance of the beam waist for the vertical axis, z_w0-V, might be different to the distance of the beam waist for the horizontal axis, z_w0-H, which is referred to as astigmatism. For semiconductor-based, edge-emitting light sources, it is also common that the horizontal beam waist is larger compared to the vertical beam waist, thereby resulting typically in a larger propagation distance Δz_R-H around the waist position. It is possible that the crossing point of horizontal and vertical beam diameter, z_rb, at which the collimated optical beam has perfect circularity, may occur between the vertical waist position, z_w0-V, and the horizontal waist positions, z_w0-H, or at least close to both. Around this crossing point of perfect circularity, z_rb, a certain propagation distance Δz_rb can be defined over which the collimated beam has sufficient circularity, meaning that the ellipticity is above a certain minimum value, for example 70% as illustrated by the rectangular box around z_rb. Here, the ellipticity is defined as the ratio of the smaller beam diameter of the two axes versus the larger beam diameter of the two axes. Consequently, a perfectly circular beam would have an ellipticity of 100%. As illustrated by way of example in Figure 13a, an elliptical beam output from a light source that is collimated with a single collimation lens may result in a collimated beam with a strong astigmatism where the horizontal and vertical beam waist positions have a larger distance z relative to each other such that the beam divergence in either horizontal or vertical direction at the crossing point has a larger slope, thereby resulting in only a smaller range Δz_rb with acceptable circularity.

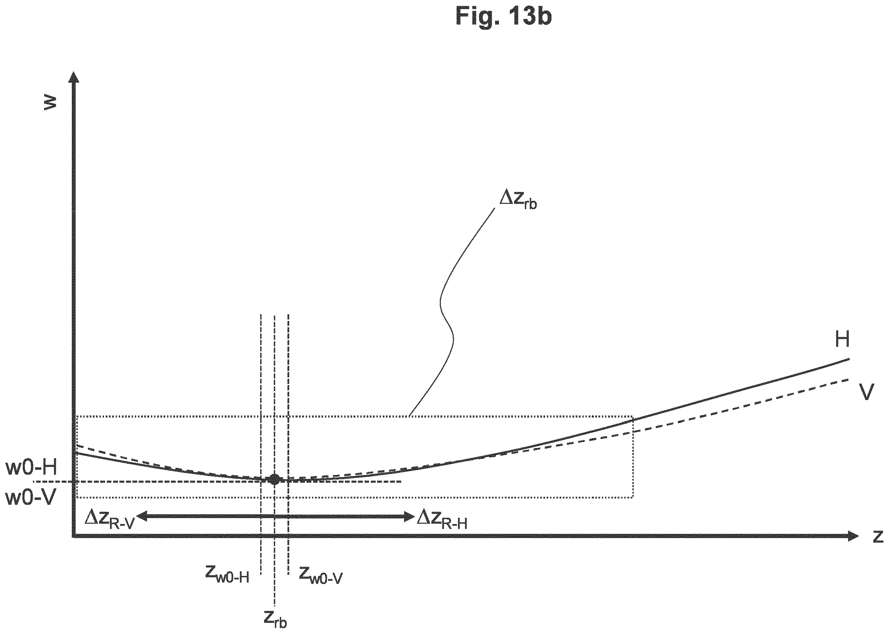

Figure 13b is to be compared with Figure 13a and shows the improved performance that is achievable as in embodiments of the invention when a crossed pair of collimation lenses is used to form a collimated beam from the output of an edge-emitting, semiconductor light source, such as an LD or an SLD. A crossed pair of collimation lenses has the role of independently collimating in each of the horizontal, slow axis and the vertical, fast axis with a first fast-axis collimation (FAC) lens and a second slow-axis collimation (SAC) lens. Here, the FAC and the SAC can be optimized, and their position can be adjusted such that the vertical beam waist w0-V and the horizontal beam waist w0-H not only have similar values to each other but also occur at similar propagation distances z_w0-V and z_w0-H, respectively, from the light source module. Consequently, the crossing point of horizontal and vertical beam diameter, z_rb, at which the collimated optical beam has perfect circularity, is also close to these distances. In this scenario, the resulting beam divergence is similar for the vertical, fast axis and the horizontal, slow axis, meaning that also the propagation distance of Δz_rb with sufficient circularity can be significantly larger - indeed much larger than Δz_R-V and Δz_R-H, as illustrated. By way of comparison, using a single collimation lens, the propagation distance Δz_rb of an acceptably circular (i.e. round) beam could be tens of millimetres while it may be tens of centimetres when using a separate FAC and SAC lens, which is clearly beneficial for many system architectures.

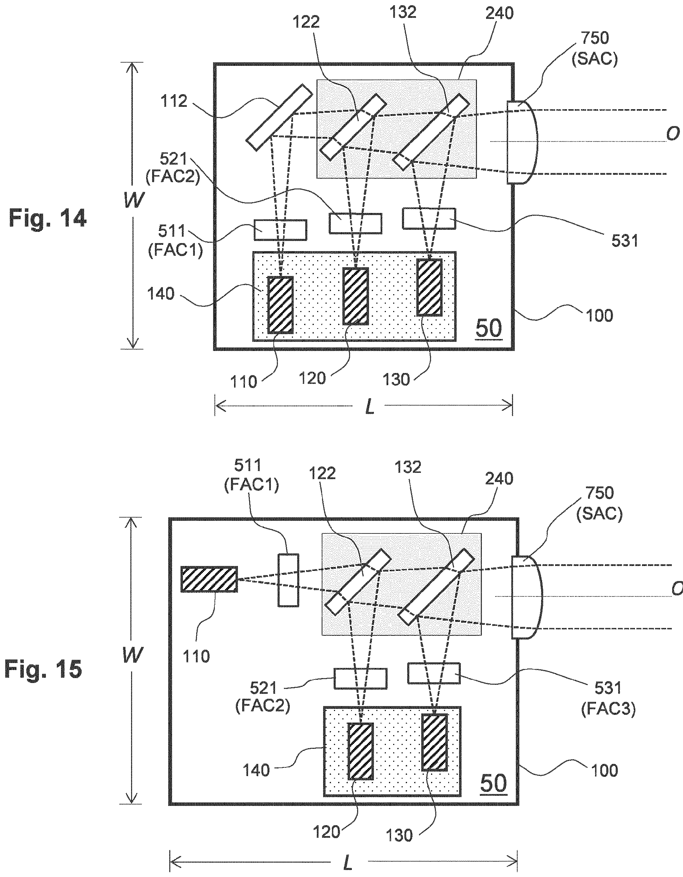

Figures 14 to 19 are schematic plan views of light source modules according to further embodiments of the invention. The same or corresponding features are labelled with the same reference numerals as used previously and are not all explicitly mentioned again in the following description.

Figure 14 shows a variant of the design of Figure 9 according to another embodiment in which the SAC lens 750 is formed integrally in the end wall of the module housing or enclosure 100 thereby dispensing with the need for the separate window 150. The length, L, of the module enclosure can thus be reduced. Moreover, a further optical component is eliminated.

Figure 15 shows a variant of the design of Figure 9 according to another embodiment in which the plane mirror 112 is dispensed with and instead the first emitter 110 is arranged to emit in the lengthwise direction of the module. Although the plane mirror 112 is dispensed with, this design will generally result in an increased length, L, of the module and also dictate against being able to mount all the emitters on the same submount 140 (or greatly increase the size of the submount).

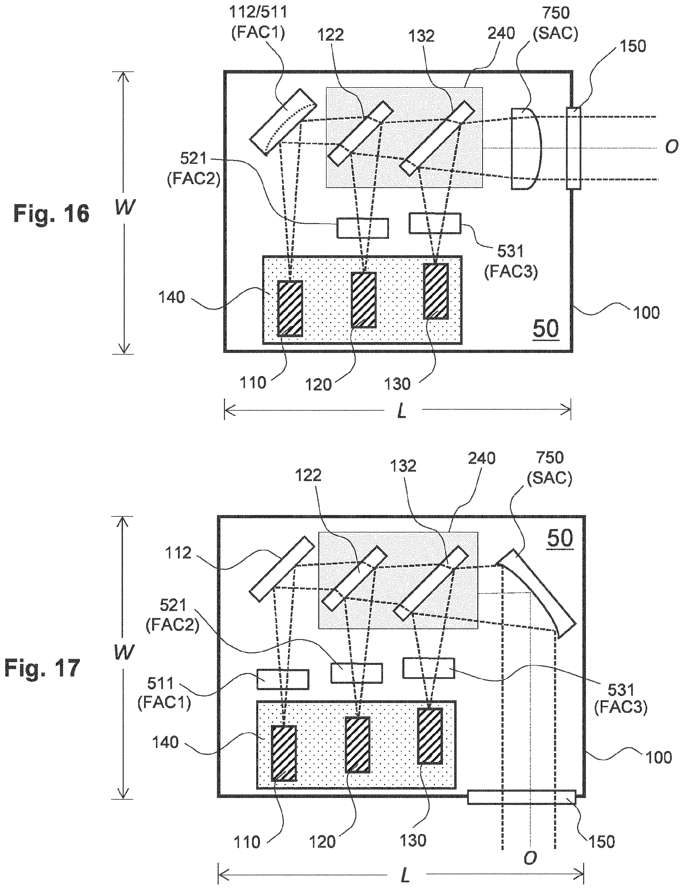

Figure 16 shows a variant of the design of Figure 9 according to another embodiment in which the functions of the plane mirror 112 and FAC lens 511 are combined by a mirror 112/511 with a concave mirror surface in the fast-axis orientation. One fewer component is therefore needed.

Figure 17 shows a variant of the design of Figure 9 according to another embodiment in which a SAC mirror 750 is used instead of a SAC lens. The SAC mirror 750 receives the combined output beams from the beam combiner 240 and simultaneously collimates the beams along their slow axes and deflects them by 90 degrees, so that the beams are output in the opposite direction to the propagation direction of the beams as output from the emitters 110, 120, 130. Another option would be if the SAC mirror 750 were rotated clockwise by 180 degrees compared with the illustration in which case the beam would be output in the same direction as the propagation direction of the beams as output from the emitters 110, 120, 130.

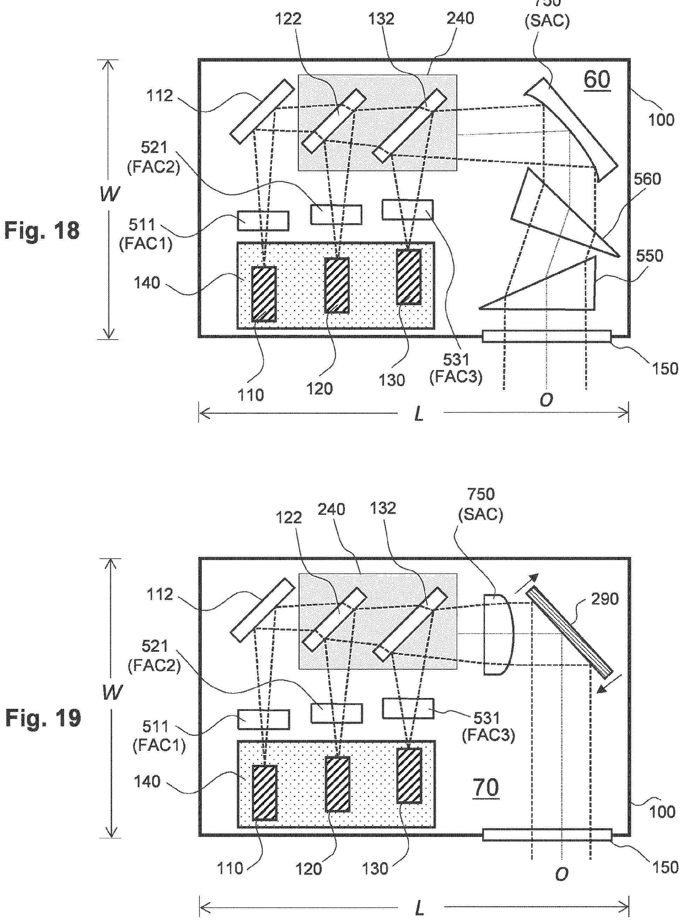

Figure 18 shows a variant of the design of Figure 9 according to another embodiment in which additional beam-shaping optics are positioned after the SAC mirror 750, for example a pair of prisms, namely a first prism 560 and a second prism 550. The beam-shaping optics receives the combined output beams from the SAC mirror 750 and changes the beam diameters of all beams simultaneously in one or both axes by a fixed magnification factor. For example, an amorphic prism pair placed in the horizontal plane, as shown in Figure 18, may either increase or decrease the horizontal beam diameters of all beams such that a residual beam ellipticity is removed and circular beams are generated. For such an amorphic prism pair, the propagation direction through the prism pair will decide whether the beam diameters will be enlarged or reduced. Such beam-shaping optics may also be employed to intentionally generate a certain beam ellipticity at a defined reference distance, z_ref, away from the light source module (which may be unity for a circular beam). Alternatively, such beam-shaping optics could be placed such that the beam diameters in the vertical direction are either increased or decreased by a certain amount. Another option would be to position such beam-shaping optical elements after a common SAC lens (e.g. to modify the embodiment of Figure 16) instead of after the common SAC mirror as provided in the present embodiment.

Figure 19 shows a variant of the design of Figure 9 according to another embodiment in which an additional beam-steering element 290 is positioned after the common SAC lens 750. The beam-steering element could be, for example, a micro-electro-mechanical mirror (MEMS) that is mounted to oscillate or rotate about one axis (e.g. with a hinge mount), two perpendicular axes (e.g. four tilt actuators arranged in a rectangle or square which are independently drivable to form arbitrary pairings) or an arbitrary axis (e.g. ball mount). The beam-steering element allows steering of the received collimated beams from the emitters 110, 120 and 130 to provide a time-dependent propagation direction through the common output window 150. The beam-steering element can be used to steer all beams together when the emitters 110, 120, 130 are on simultaneously. The beam-steering element can also be used in display applications where the emitters are time-division multiplexed such that only one primary colour is emitted at any one time in order to steer each primary colour beam separately. It shall be understood that the addition of a beam-steering element inside the common package could be realized also for any of the other embodiments mentioned.

In the above detailed description, it is assumed that the first beam axis to be collimated is the fast axis and the second beam axis to be collimated is the slow axis. This is preferred for modules with emitters that emit highly elliptical beams, i.e. with a large ratio of major-to-minor beam cross-section, to avoid the beam becoming too large along the fast axis before completion of the collimation. However, all the above embodiments can be modified to reverse the order of the single-axis lenses to provide a module with individual SAC lenses arranged prior to beam combination and a common FAC lens arranged after beam combination. This may be practical when the emitters emit beams that are circular in cross-section or have only relatively small ellipticity.

Furthermore, in the above description, it has been mentioned that, for each beam, a first FAC lens would perform fast-axis collimation followed by a second, common SAC lens performing slow-axis collimation. It shall be understood that each lens can be also realized with a so-called "free-form lens" that would have a defined refractive power with an arbitrary and freely selective surface in either horizontal or vertical axis, or even a radially symmetric or asymmetric surface profile in order to perform full or partial beam collimation in either axis for a specific input wavelength or beam divergence.

Moreover, a first FAC lens or a second SAC lens could be realized by not having well-defined optical surface profiles in one or the other optical axis at the input or output side of the lens but by realizing a well-defined profile of the refractive index in one or the other optical axis at either the input side or output side of the lens. Lenses of this type are commonly referred to as graded-index (GRIN) lenses.

Furthermore, the concept of a first FAC lens and a common, second SAC lens can be extended to so-called "metalenses" that have a flat optical surface instead of a concave or convex optical surface to generate a refractive optical power, for example to focus or collimate light beams. Metalenses are a new type of lenses with a flat metasurface made of dielectric or plasmonic materials and nanostructures that typically induce a phase change on a sub-wavelength range to modify the amplitude distribution or wavefront of an optical beam.

The expectation is that metalenses will induce lower amounts of beam distortions and aberrations compared to traditional spheric or aspheric lenses, which might be important for certain applications, including display applications, where beam quality is important.

Suitable light sources for light source modules according to embodiments of the invention include semiconductor emitters based on pn-junction emission such as LDs, SLDs and semiconductor optical amplifiers (SOAs).

Commercially, the dominant materials system for current blue or green LDs and SLDs is based around gallium nitride and related materials, principally those in which gallium is partially or wholly substituted with aluminium and/or indium in the quaternary system GaAIInN. The structure of a blue or a green LD or SLD chip may be made from the GaAIInN materials system. In red LD and SLD chips, the semiconductor heterostructure may be made of one or a multiple number of light-emitting layers that are sandwiched between doped layers of different type. The active layers may contain In, Al, Ga, As or In, Al, Ga, P elements. P-type layers are above, towards the surface of the device. N-type layers are below, in between the light emitting layers and a substrate (GaAs). Both n- and p-layers may contain In, Al, Ga, As or In, Al, Ga, P elements.

While all the illustrated embodiments show three emitters, all these designs are readily applicable to greater numbers of emitters with each extra emitter requiring one more dichroic filter to be added to the beam combiner. The designs may also be used with two emitters in which case only one dichroic mirror would be needed. Embodiments of the invention may provide light source modules with various combinations of sources. Particular combinations of interest are:
- 3 x SLDs (RGB)
- 3 x LDs (RGB), either edge-emitting or VCSEL sources
- at least 1 LD and at least 1 SLD of another colour
   → example 1: blue LD, green LD, red SLD
   → example 2: blue LD, green SLD, red SLD
- Any of the above RGB sources + 1 NIR SLD
   → example 1: NIR SLD used for OCT imaging
   → example 2: NIR SLD used for eye tracking (e.g., SLO)
- Any of the above RGB sources + 1 NIR LD
   → example: NIR LD used for MEMS scanner control or for eye tracking

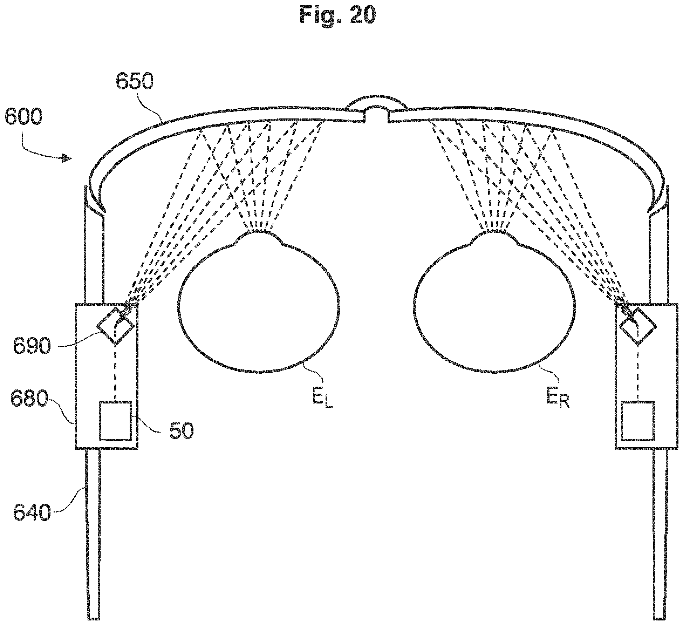

Figure 20 shows a wearable headset 600 in spectacles format incorporating a near-to-eye display projector. A housing 680 is integrated midway along each temple (i.e. arm) 640 and houses a light source module 50 embodying the invention. Combined RGB output beams emitted from the light source module 50 are directed to a beam scanning unit 690 which projects the output beams onto the glass surface 650. The beam scanning unit 690 may be based on a MEMS light engine. The RGB light beams are then reflected from the glasses to form of a virtual image in front of a wearer's eye, i.e. the left eye E_{L} or the right eye E_{R}, through an outcoupling element. Projection in front of both eyes allows for additional imaging possibilities, such as stereoscopic imaging for 3D. The display projector can thus be incorporated into glasses, spectacles or another head-mountable unit.

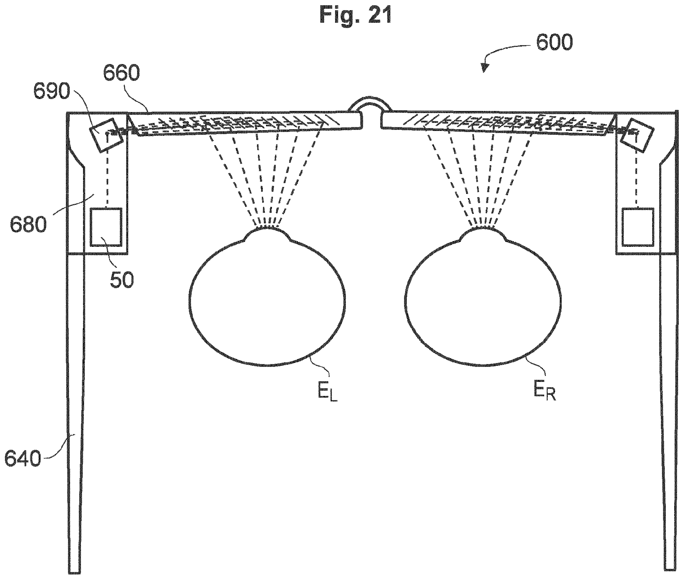

Figure 21 shows another kind of wearable headset 600 in a spectacles format incorporating a near-to-eye display projector. Here, the combined RGB output beams emitted from the light source module 50 are directed to a beam scanning unit 690 that steers the output beams into the glasses 660 through a suitable entry window. The glasses have embedded waveguide structures to guide the RGB light beams and also have embedded optical elements, for example diffractive grating elements, to extract the RGB light beams from the glasses and redirect towards the wearer's eyes.

It will be clear to one skilled in the art that many improvements and modifications can be made to the foregoing exemplary embodiments without departing from the scope of the present disclosure.

## Claims

1. A light source module (50) comprising:
a plurality of semiconductor emitters (110, 120, 130), each configured to emit a beam at a different peak emission wavelength, each emitted beam being divergent with a more divergent, fast axis and a less divergent, slow axis;
a plurality of first single-axis focusing elements (511, 521, 531) arranged to focus the beams emitted from respective ones of the emitters in one of the fast and slow axis while the beams remain divergent in the other of the fast and slow axis;
one or more dichroic mirrors (122, 132) arranged to receive the beams from the individual first single-axis focusing elements and configured to act as a beam combiner (240) to bring the beams into a common optical axis; and
a common second single-axis focusing element (750) arranged to focus the combined beams output from the beam combiner in the other of the fast and slow axis and output them as respective output beams that form an image in a common plane located at a reference distance away from the light source module.

2. The module of claim 1, wherein, in the common plane, each output beam has a beam diameter that is no more than 1.3, 1.4, >/2 or 1.5 times the beam diameter at its beam waist.

3. The module of claim 1, wherein, in the common plane, each output beam has an ellipticity of greater than 70%, 80% or 90%, where ellipticity is the ratio of the smaller one of the beam diameters of the fast and slow axes versus the larger one of the beam diameters of the fast and slow axes.

4. The module of claim 1 or 2, wherein, in the common plane, the ratio of the beam diameters of the smallest one of the beam diameters versus the largest one of the beam diameters is greater than 50%, 60%, 70%, 80% or 90%.

5. The module of any preceding claim, wherein the individual first single-axis focusing elements are arranged to focus the fast axis and the common second single-axis focusing element is arranged to focus the slow axis.

6. The module of any preceding claim, wherein the emitters, individual first single-axis focusing elements and dichroic mirrors are accommodated in a housing (100) and the second single-axis focusing element is a lens integrated in a wall of the housing as an output window.

7. The module of any of claims 1 to 6, wherein every one of the first single-axis focusing elements is a lens or lens combination.

8. The module of any of claims 1 to 6, wherein all but one of the first single-axis focusing elements are lenses or lens combinations, the other being a concave mirror which is arranged to direct its output onto a back surface of a first one of the dichroic mirrors.

9. The module of any of claims 1 to 6, wherein the common second single-axis focusing element is a lens or lens combination.

10. The module of any preceding claim, wherein the semiconductor emitters are any combination of:
edge-emitting superluminescent light-emitting diodes;
edge-emitting laser diodes; and
vertical-cavity surface-emitting lasers.

11. The module of any preceding claim, wherein respective ones of the semiconductor emitters have peak emission wavelengths with red, green and blue colours to provide an RGB light source module and optionally there is also a semiconductor emitter with a peak emission wavelength in the near-infrared.

12. The module of any preceding claim, further comprising a beam-steering element (290) arranged to receive the combined beams output from the common second single-axis focusing element and controllably vary the direction which the output beams exit the light source module.

13. The module of any preceding claim, further comprising one or more beam-shaping optical elements (550, 560) arranged to receive the combined beams output from the common second single-axis focusing element and reshape the combined beams before they exit the light source module.

14. A display projector module (680) comprising:
a light source module (50) according to any of claims 1 to 13; and
a beam scanner (690) for raster scanning the beams to form an image.

15. A vision system (600) configured to be placed on a human head incorporating a display projector module according to claim 14.
